Europäisches Patentamt

European Patent Office

Office européen des brevets

(11) Publication number: **0 076 591**
**B1**

# EUROPEAN PATENT SPECIFICATION

(45) Date of publication of patent specification: **27.08.86**

(51) Int. Cl.⁴: **B 60 K 17/04, F 16 H 37/04**

(21) Application number: **82304972.1**

(22) Date of filing: **21.09.82**

(54) **A transverse gearbox for a vehicle with an in-line engine.**

(30) Priority: **23.09.81 DE 3137805**

(43) Date of publication of application:
**13.04.83 Bulletin 83/15**

(45) Publication of the grant of the patent:
**27.08.86 Bulletin 86/35**

(84) Designated Contracting States:
**AT BE DE FR GB IT NL SE**

(56) References cited:
**EP-A-0 024 100**
**DE-B-1 285 338**
**DE-U-1 971 348**
**GB-A-1 230 738**
**GB-A-2 051 265**

(73) Proprietor: **DEERE & COMPANY**
**1 John Deere Road**
**Moline Illinois 61265 (US)**

(72) Inventor: **Weiss, Heinz**
**Volkerstrasse 24**
**D-6140 Bensheim (DE)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a transverse gearbox for a vehicle with an in-line engine, especially a tractor or other agricultural or earth-working vehicle. The gearbox is of the type set forth in the introductory part of claim 1.

It will be understood that the terms "transverse" and "longitudinal" are relative to the direction of travel.

The present invention is concerned with a compact gearbox for a vehicle such as a tractor which needs a large range of gear ratios to cater for working conditions and travel on the road. This requires a change-speed gear to be cascaded with at least one range gear in order to multiply up the ratios.

DE—U—1 971 348 describes a gearbox in accordance with the introduction part of claim 1, in which bevel gears drive a transverse input shaft of a change-speed gear having a hollow output shaft on a second shaft line driving a differential gear selectively through a single planetary range gear. The differential gear and range gear are on the opposite side of the engine shaft from the change-speed gear. The differential gear drives two half-shafts, one of which crosses over to the other side through the hollow output shaft. The space on the said opposite side of the engine shaft has to accommodate both the range gear and the differential gear and only limited ratios are possible, namely 2 × 4 (range × change-speed) in the described gearbox.

In the embodiment of the invention described below it is possible to accommodate a 3-speed range gear and even an optional creep gear so that, with a 6-speed change-speed gear, the theoretical number of ratios is 3 × 6 = 18 or even 2 × 3 × 6 = 36. The object of the present invention is accordingly to provide a transverse gearbox with an improved layout such that a large number of gear ratios may be attained.

The invention is characterised in the manner set forth in claim 1.

It is to be understood that the possibility of some rotating components being on a third shaft (e.g. gears on a countershaft for reverse gear) is not excluded although it appears most advantageous to use the two shaft lines exclusively.

In a gearbox known from DE—B—1 285 338, the first shaft line is forward of and above the level of the second shaft line. The engine shaft includes the main clutch but direction clutches are included between oppositely rotating bevel gears on the first shaft line and the input shaft on this line. The differential is a conventional bevel differential, with differential lock, in the output shaft. As well as the spur-gear change-speed gear between the input and output shafts there is an epicyclic range gear on the second shaft line. Finally, the engine shaft may be clutched to a gear in mesh with a gear on a PTO shaft which extends longitudinally beneath the said shaft lines. This reference is concerned only with the theoretical layout of the gears and does not disclose or suggest practical ways of constructing the gearbox to meet the requirements of convenient manufacture and serving. This also applies to the gearbox of the aforementioned type disclosed in EP—A—0 024 100 which furthermore shows the engine shaft connected directly to the drive bevel gear with clutches only between the oppositely-rotating driven bevel gears and further gears on the first shaft line. (Such an arrangement is also known from the ZF-Wendetriebwerk HSt 210/1 manufactured by Zahnradfabrik Friedrichshafen AG in which, however a conventional bevel differential is on a third shaft line.)

EP—A—0 024 100 also discloses a split differential with two epicyclic gears flanking the output side of the change-speed gear on the second shaft line. The change-speed gear output is hollow and a differential shaft connects the two sun-wheels together. However the arrangement is asymmetrical and, in particular, utilizes sun and planet wheels of different sizes in the two epicyclic gears.

The known constructions, provide, at most DE—B—1 285 338, 4 gears and 2 ranges, giving 8 gear ratios in total. This is not adequate for many vehicles and a typical requirement is 6 gears and 3 ranges (18 gear ratios in total). It is frequently also desirable to be able to incorporate a creep gear which gives another set of extra low gear ratios (e.g. 18 more ratios assuming no overlap).

The gearbox according to the invention can be designed flexibly to meet all requirements for even the largest vehicles while maintaining a compact construction. The construction is such that unwanted features can simply be omitted as required, e.g. the creep gear and a differential lock can either or both readily be omitted.

The invention makes possible a gearbox which is of compact construction particularly in the longitudinal direction of the vehicle, i.e. it has small structural depth, and furthermore avoids the disadvantages of the block unit system of construction and will make available methods of production which are flexible in relation to various different customers' and model requirements.

In a preferred constructional embodiment of the invention, the component parts of the transmission gear, including the housing, are made of light-weight construction; the shells of the transmission gear housing in particular may be composed of cast iron.

Preferably, the arrangement of the component parts of the gearbox is such that the latter is substantially longer in the transverse direction, particularly at least one and a half times longer, than in the longitudinal direction of the vehicle. By this means, the space within the appropriate part of the vehicle frame in which the transmission gear is to be installed is better utilized and space is gained for the other components of the vehicle.

Since the transmission gear housing is preferably provided with a suitable amount of free space and a sufficient number of supporting positions or partition walls, it is possible to make extensive use of modern modular methods of construction, that is to say the component parts of the transmission gear, including gear wheels, planet wheel carriers, clutch disks, bevel gears etc., are to a large extent so formed that simpler and technically more versatile combinations of gears can be assembled from a relatively small number of standardised individual component parts.

In general, provision is made for the two half-shafts, which are on the second shaft line and are coupled together by the differential gear, to be extended outwardly, directly and in axial alignment, to the road wheels or to the axle-driving gear units thereof. This presupposes a suitably determined position of the gearbox and wheel axles which in most cases can be obtained and offers advantages.

The gearbox may be arranged within the rear portion of the frame of the motor vehicle, being fixed to the rear portion, more particularly to the rear cross-member thereof and cantilevered in the direction towards the engine. This is a solution, which offers advantages both from the standpoint of assembly and also in relation to vibration technology.

The installation of the gearbox according to the invention is naturally particularly suitable for all motor vehicles with a frame provided at least in the region of the installation of the gearbox, preferably motor vehicles with a complete frame, which must be made relatively wide in the region provided for the gearbox. Moreover, the use of the gearbox is not limited to the installation in the region of the rear axle, even through this is of particular importance in the case of agricultural tractors. On the other hand, front loaders with relatively large front wheel rims are also suitable, particularly if the front wheels are rigidly connected to a (partial) front frame and the steering is effected by means of the rear wheels.

In all these cases, it is important that the gearbox is not incorporated in the conventional building block system of construction, but can be secured to the vehicle frame largely without having to perform a supporting function and hence without having to satisfy increased requirements in relation to load-carrying capacity and torsional stiffness etc. In this way all the component parts of the transmission gear, including the housing, can advantageously be made of lightweight construction, with the corresponding advantages so far as cost and weight are concerned.

The invention will now be described in more detail, by way of example, with reference to the accompanying drawings, in which:

Fig. 1 shows a known agricultural tractor in diagrammatic elevation;

Fig. 2 shows an agricultural tractor embodying the invention, of the same overall length, in diagrammatic elevation;

Fig. 3 shows the underside of an agricultural tractor according to Fig. 2;

Fig. 4 shows the complete chassis frame in perspective representation, the possible positions of the most important components in the rear region of the frame being indicated in diagrammatic manner;

Fig. 5 is a schematic representation of the main transmission gear/axle-driving unit and of the arrangement thereof in relation to the rear portion of the frame and the rear wheels, shown partly as a section;

Fig. 6 is a diagram of the main gearbox, in a construction which makes possible a variety of uses, including a creep gear and an epicyclic input gear unit, sectioned in the plane defined by the centre-lines of the main shafts;

Fig. 7 is a diagram of the main transmission gear in an embodiment which is simplified compared with Fig. 6, again shown in the same plane; and

Fig. 8 is a vertical section through the transmission gear housing, taken in the longitudinal direction of the vehicle.

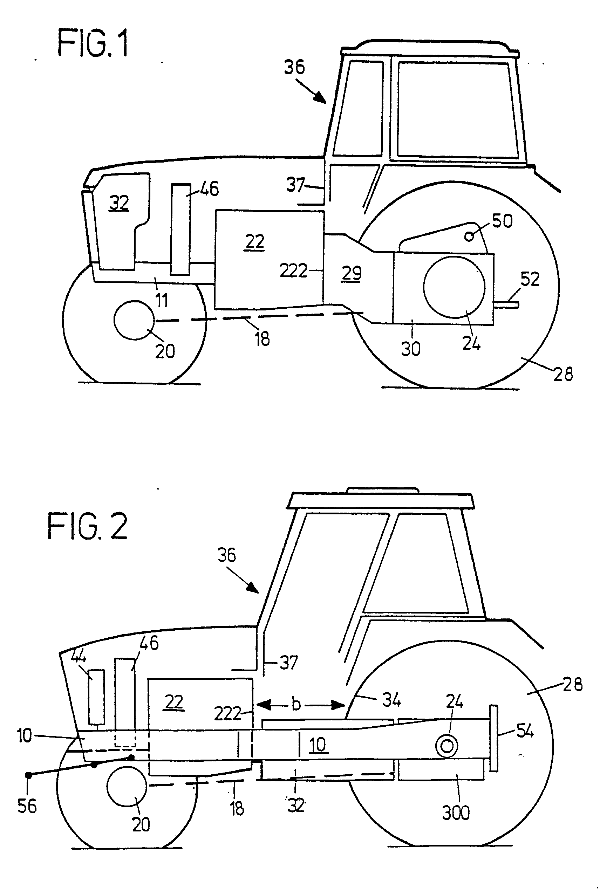

Figs. 1 and 2 show agricultural tractors in diagrammatic elevation, parallel to the longitudinal axis. The right-hand front and rear wheels can be seen in projection.

An agricultural tractor of conventional construction is shown in Fig. 1. A half frame 11 at the front is located above the front axle 20. Near to or above it are located the fuel tank 32 and the radiator 46. The engine 22 is rigidly fixed to the half frame 11. Behind the rear end 222 thereof which faces the drivers cab 36 is the position of the front wall 37 of the cab. With a space-saving form of construction, i.e. with a restricted overall length, as well as the relatively large rear wheels which are customary nowadays, restricted and difficult access to the cabin results.

Behind the engine 22 are the clutch housing 29, gearbox 30 and rear axle housings 24 for the rear wheels. A PTO shaft 52 projects from the gearbox. A rockshaft 50 is provided for rear hitch.

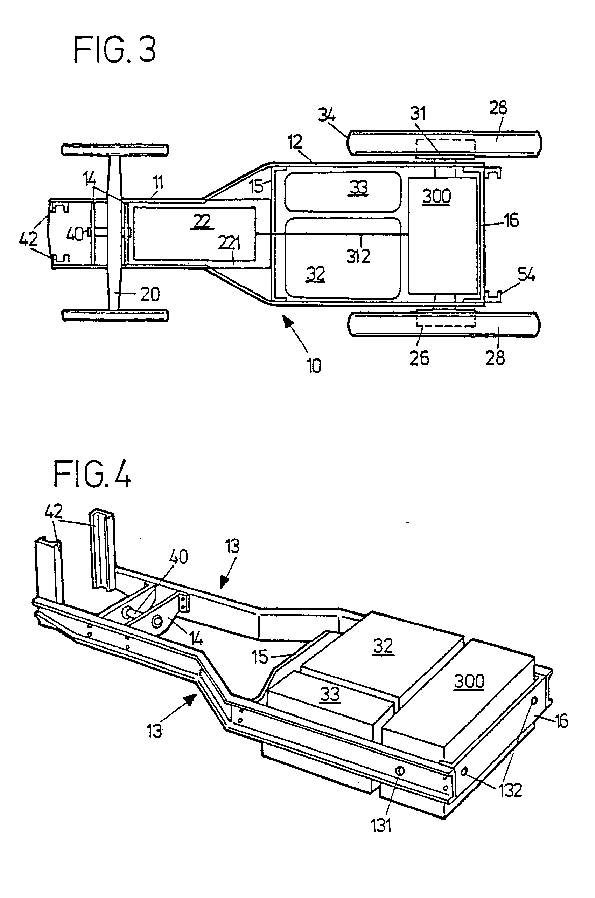

Fig. 2 shows an arrangement according to the invention, in which space relationships are provided which are more favourable for the accommodation of the components as well as for convenient entry into the cabin, while the overall length remains unchanged. For this purpose, the tank 32 which was formerly located in the front is transferred to the middle region of the vehicle which in this case is provided with a complete, full length frame 10. The conventional gearbox 30 is replaced by a transverse gearbox 300. The engine 22 is moved as far forward as possible, i.e. right up to the front axle 20. The desirable forward displacement of the cab 36, compared with the former construction, is still limited by the position of the rear end 222 of the engine because the floor level must be low enough in the cabin. However the forward displacement of the engine 22 enables the cabin 36 now to be correspondingly forwardly displaced as is apparent from Fig. 2. For the same chassis length and the same wheelbase, there is thereby obtained a substantially wider and more comfortable access opening, the width of which is indicated by "b". The distance between the rear end 222 of the engine and the front edge of the wheel mudguards may amount, for example, to 0.5 to 0.8 m. The amount of space gained by the use of a complete frame 10 and the transverse gearbox 300, more particularly with a view to accommodating a large capacity fuel tank 32 and other storage space for operating materials and machinery, is clearly apparent in Fig. 3. Much space is gained by using the wasted space of the conventional axle housings 24 for the gearbox 300, which can incorporate all clutches and is axially much shorter than the clutch 29 and gearbox 30 of Fig. 1. Furthermore, there is shown in the left-hand part of Fig. 2 in front of the radiator 46 a ram cylinder 44 which forms part of an integrated front-mounted implement lift under the front part of the bonnet, which can be as described in our copending application EP 82 304 373.2 (corresponding to EP—A—0083146). Vertically swinging lower links 56 extend outwardly through slots in the front part of the bonnet and are raised and lowered by respective cylinders 44 mounted in channel-section uprights 42 shown in Fig. 4.

At the rear of the frame 10 are mounting uprights 54 (see also Fig. 3) which may be used to attach a variety of hydraulic hitch or other attachments, e.g. a lift hitch similar to that at the front. Finally, in Figs. 1 and 2 there is indicated the possibility of a front wheel drive shaft 18 for any kind of mechanical front wheel drive extending forwardly from the gearbox 30 or 300 to the front axle 20.

Figs 3 and 4 are concerned with the frame structure for the tractor which is shown in Fig. 2. Fig. 3 shows the view of the underside. The front portion 11 of the frame 10, must be narrow to obtain a small turning circle. The frame is formed by symmetrical, channel-section, longitudinal beams 13 formed so as to crank outwardly from parallel, closely-spaced portions at the front portion 11 to parallel, widely-spaced portions at the rear portion 12 of the frame 10. In the case of a tractor of adjustable track width, the maximum width of the rear frame portion 12 naturally depends on the narrowest track width. The beams 13 are connected by front cross-members 14, an intermediate cross-member 15 and a rear cross-member 16 which has attachment holes 132 (Figs. 4) for fixing the uprights 54 (Fig. 3).

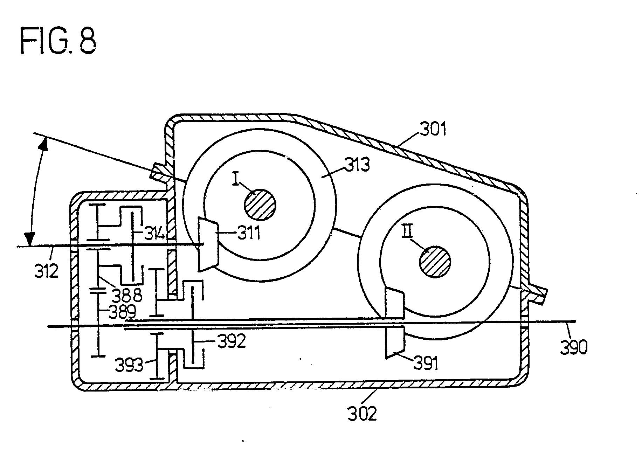

The frame 10 shaped as described above is ideal for accommodating the transverse gearbox 300, although basically a conventional transmission arrangement could also be used with such a frame. When a transversely disposed gearbox is used, the maximum width of which corresponds to that of the rear frame portion 12, as shown in Fig. 3, a particularly large space is made available as a result for the reception of a large volume fuel tank 32 and further storage reservoirs for operating materials, such as for example an oil reservoir 33. The engine shaft 312 extending from the engine 22 to the gearbox 300 is only diagrammatically indicated. Obviously the tank 32 must if necessary have a suitable tunnel in its underside, or a channel in the top to accommodate the shaft. In general, the representation of the components 32, 33 and 300 is very schematic, this being particularly so in the case of Fig. 4. Thus, for example, the gearbox housing may have, in the region where the input shaft enters it, a bell-shaped bulge for the reception of a clutch (in this connection, see Fig. 8).

In Fig. 3, half shafts 31 extend to the left and right from the gearbox to wheel axle reduction gear units 26. The openings 131 provided in the frame for the half shafts 31 are shown in Fig. 4.

The front axle may be mounted on a bolt 40 which spans the front cross-members 14. The engine 22 — as is clear from the left-hand part of Fig. 3 — directly adjoins these cross-members and is preferably enclosed by a sound-damping cowling 221. In the case of a modular type of construction for a range of tractors, the whole of the vehicle frame is so dimensioned that the width of the front part of the frame 10 and the distance from the front axle to the intermediate cross-member 15 is sufficient to take an engine of the maximum size for the range. The engine 22 may be fixed to the longitudinal beams 13, but it is preferable to mount it in a cantilevered manner on the cross-member 15, especially with the use of oscillation-damping elements. The arrangement of further components and lines for fuel, oil, etc. is not shown in detail; this lies in the discretion of the expert and needs no precise explanation.

Fig. 4 shows in perspective the vehicle frame used in Figs. 2 and 3, with the front cross-members 14 and the intermediate and rear cross-members 15 and 16. The longitudinal beams may be either riveted or bolted to the cross-members. The same applies to the lift support uprights 42 and 54.

The components 32, 33, 300 may be partly or wholly covered by decking (not shown) which may also form the floor of the driver's cab. This decking may, according to the weight distribution of the other components, perform a weight equalizing function and may be made in the form of a cast plate of the correct weight for this purpose. This plate is advantageously supported on the frame 10. If the components project above the upper edge of the frame 10 — as shown in Fig. 4 — the plate may be formed with downturned side flanges or be supported via intermediate blocks.

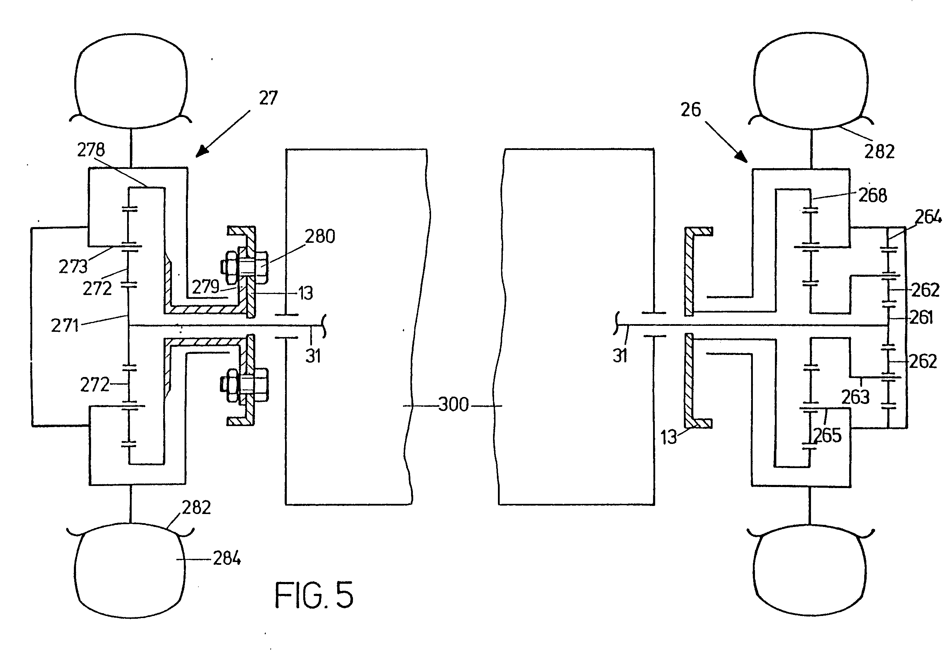

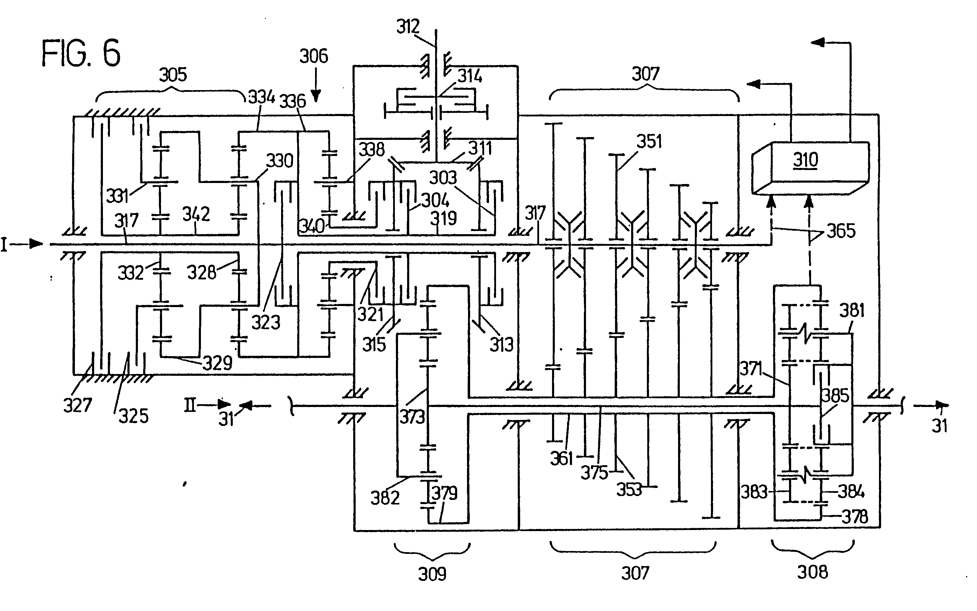

In the Figs. which follow the mounting and construction of the gearbox 300 in the region of the rear portion 12 of the frame are shown. Fig. 5 illustrates the overall arrangement of the transmission gear and especially the layout of the final drive units 26 or 27 which are preferably epicyclic gears. Figs. 6 to 8 show the main gearbox 300 which is particularly suitable for the previously shown overall concept but which can be used in general in agricultural and other vehicles.

Fig. 5 shows a schematic vertical section of the rear axle driving means. In the middle is shown the main transmission gear 300 and on the left and right can be seen the rear axle driving units 26 and 27 which in this case have the form of epicyclic gears. On the left-hand side there is shown a one-stage epicyclic gear 27 and on the right-hand side a two-stage epicyclic gear 26. It is understood that the two alternatives are shown for convenience in one Fig. In an actual vehicle both units will be the same. The epicyclic gears 26 or 27 have a fixed reduction ratio and are driven by the half shafts 31 extending outwardly from the gearbox. Firstly the one-stage epicyclic gear 27 shown on the left-hand side will be described.

A sun wheel 271 on the half-shaft 31 is in mesh with planet wheels 272 which are mounted in a planet carrier 273. The carrier 273 is fixed integrally within the wheel rim 282. The planet wheels 272 roll inside a fixed annulus 278. The annulus is integral with a sleeve and a flange 279, the half-shaft 31 passing through the sleeve. The flange 279 is the means whereby the whole unit is mounted on the beam 13, to which it is fixed by bolts 280. The carrier 273 encloses the whole unit and has a sleeve which encircles the annulus sleeve. An oil seal is provided between these sleeves.

In operation, the planet carrier 273 is driven together with the rear road wheel 28 in the same direction of rotation as the sun wheel 271. Thus the wheels are driven with a reduced rotational speed and an increased torque. This applies to an increased extent in the case of the two-stage epicyclic gear 26 shown on the right-hand side, where the sun wheel 261 on the half-shaft 31 drives planet wheels 262 whose carrier 263 is integral with the sun wheel of the second stage. The annulus 264 of the first stage and planet carrier 265 of the second stage are integral with each other and with the wheel rim 282. The annulus 268 of the second stage is fixed and again is the means whereby the unit is mounted on the beam 13.

Although other forms of final drive reduction gears and means of mounting the same could be employed the described construction forms an advantageous self-contained unit useful in general in front and rear wheel drives.

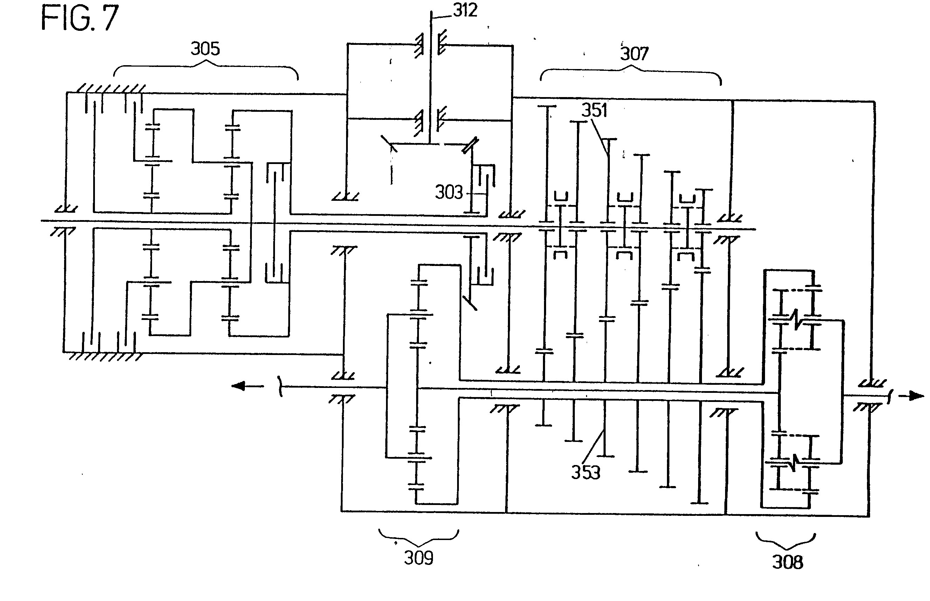

Figs. 6 and 7 are schematic views of the main gearbox, taken approximately in the parting plane of the housing parts 301 and 302 which are shown in Fig. 8, a plane which inclined with respect to the input shaft 312. The preferred modular type of construction is already apparent from a rough comparison of the two Figs. 6 and 7, which are formed basically from the same components except that Fig. 7 omits some features of the more versatile gearbox according to Fig. 6. Accordingly, the space provided therefor in the similarly constructed housing remains unused.

The main gearbox 300 according to Figs. 6 and 7 is, as is apparent, constructed so as to attain the desired small dimensions in depth and in the longitudinal direction of the tractor by arranging the rotating components on only two shaft lines I and II which extend parallel to each other.

Basically, it would obviously be possible to arrange some of the components on a third shaft or to arrange a third shaft here and there as an auxiliary shaft, but the space saving arrangement using only two main shaft lines is most advantageous.

In the left-hand part of Fig. 6 can be seen an input-side two-stage epicyclic gear unit 305 having a load-responsive gear-change and providing three ranges of gears. Adjoining the right-hand side of this unit is a creep gear unit 306. In the middle part there is shown, entering from the top, the engine shaft 312 with a power take-off shaft clutch 314 located at the input of the transmission gear. The power take-off shaft itself is not visible; it is located beneath the plane shown (see Fig. 8). The engine shaft 312 ends in a driving bevel gear 311 which is in mesh with the bevel gear 313 of a main clutch 303 as well as with the bevel gear 315 of a reversing clutch 304. On the right-hand side of the clutches part there is a six-stage synchromesh change-speed gear 307 with input gears on an input shaft 317 on the line I and output gears 353 on a hollow output shaft 361 on the line II. The output gears 353 of the change-speed gear are flanked by the two halves of a spur gear epicyclic differential 308, 309 which is constructed in two parts. The half shafts 31, which are on the second shaft line II, extend outwardly from the left and right differential gear halves to the wheel axle drive gear units which have already been described.

The gearing arrangements which are shown in Fig. 6 make possible, in conjunction with the clutches 303 (forward) and 304 (reverse) $3 \times 6 = 18$ forward speeds and an equal number of reverse speeds. In addition, the creep gear 306, with a gear ratio reduction of for example 1:4, makes available a further range of 18 forward creep speeds.

Power flow to the change-speed gear input shaft 317 is as follows:—

(a) 18 forward speeds: bevel gear 313, clutch 303, a hollow shaft 319 (on which the bevel gears 313 and 315 are journalled) and the range gear 305.

(b) 18 reverse speeds: bevel gear 315, clutch 304, hollow shaft 319 and range gear 305.

(c) 18 creep speeds: bevel gear 315, a creep clutch 321, creep gear 306 and range gear 305.

After this general survey, the transmission gear according to Fig. 6 will now be described in detail.

The input shaft 312 is provided at its end with the bevel gear 311 which is keyed to rotate with it and is in mesh with the two helically toothed bevel gears 312 and 315 disposed opposite each other in mirror image relationship. These bevel gears 313 and 315 are mounted so as to be freely rotatable on the hollow shaft 319 and can be selectively locked with respect to the latter by means of the main clutch 303 or the reverse clutch 304, which are preferably plate clutches or multi-disk clutches, in order to drive the hollow shaft 319 in one direction of rotation or the other.

In the region of the epicyclic range gear 305, the hollow clutch shaft 319 terminates in a hollow double annulus unit 334, 336 which is fixed for rotation with the shaft. The annulus portion 336 of this double annulus rotates round the creep gear planet carrier 338 which is fixed to the gear housing. The creep gear sun wheel 340, which is in mesh with the planet wheels on the planet carrier 338, is loosely mounted on the hollow shaft 319 and can be coupled with the bevel gear 315, by engaging the creep clutch 321.

The hollow double annulus unit 334, 336 constitutes at the same time a support for a clutch 323, by means of which direct drive (third ratio) can be effected to the input shaft 317. The annulus 334 of the hollow unit 334, 336 is in mesh with the planet wheels on the planet carrier 330 of the first (inner) stage of the epicylic range gear unit 305, which planet carrier 330 is fixed for rotation with the drive shaft 317 and is also integral with the annulus 329 of the second epicyclic stage.

The sun wheels 328, 332 of the two stages are fixedly mounted on a common hollow shaft 342, which is journalled on the input shaft 317. The hollow shaft 342 can be held stationary by means of a brake 327 and the planet wheel carrier 331 of the second stage by means of a brake 325. Both brakes are preferably fixedly mounted on the housing.

In the following, the power flow according to the left-hand part of the drawing will be further explained:

The input-side gear unit 305, which consists of two epicyclic stages and has a load-responsive gear change, is advantageously constructed on the unit construction principle from uniformly dimensioned sun wheels, planet wheels, annuli etc. It makes possible, according to which of the two brakes 325, 327 is operated, two gear ratio reductions in the sense of a reduction in the rotational speed of the shaft 317. When the brake 327 is engaged, the sun wheel 328 of the inner epicyclic stage is stationary, so that the corresponding annulus 334, which is drivably connected with the clutch shaft 319, drives the planet wheel carrier 330 in the same direction of rotation as the shaft 319. When the brake 325 is engaged, the planet carrier 331 of the second stage is held stationary and the sun wheels 328 and 332 are positively coupled together, as a result of which a gear ratio reduction in the sense of a lower rotational speed is produced via the planet carrier 330. The direct third speed is engaged by the clutch 323, the brakes 325 and 327 both being disengaged. The shafts 319 and 317 are coupled together for the direct drive and rotate at the same speed.

Basically, it is possible within the scope of the invention to make use of various different known two-stage epicyclic gears. The epicyclic gear illustrated incorporates no reverse gear. This is however, provided for by the reverse clutch 304. If the reverse function is not thus provided (see Fig. 7), then the reverse speeds can be provided in known manner within the range gear 305, even if this necessitates a countershaft on a third shaft line.

The creep gear 306 is brought into operation by engaging the clutch 321. Thereupon, the bevel gear 315 drives the sun wheel 340 which is mounted so as to be freely rotatable on the hollow shaft 319. The sun wheel 340 in turn is in mesh with the planet wheels on the planet wheel carrier 338 which is fixed to the housing, as a result of which the backward direction of rotation produced by the sun wheel 340 on the input side is reversed by the hollow unit 334, 336 rotating in the opposite direction, the annulus 336 of which is in mesh with the planet wheels of the creep gear. The annulus 336 of the hollow unit, which is thus driven at a considerably reduced gear ratio, now drives the epicyclic range gear unit 305 via the annulus 334 at a corresponding reduced rotational speed, i.e. there are provided additionally 18 slow forward speeds. In the same way as the range gear 305, the creep gear 306 is constructed as a module of the main transmission gear and so far as possible from components which are of the same construction and dimension as the other components of the main transmission gear.

According to how the gear-changing possibilities described above, including the clutches or brakes 303, 304, 321, 323, 325, 327 (of which 303, 304, 321, 323 are operable under load), are operated, the input shaft 317 is driven with various different reduction ratios and directions of rotation by the two gear units 305 and 306 which are arranged on the input side of the change-speed gear 307.

The input shaft 317 extends into the right-hand half of Fig. 6 into the change-speed gear unit 307 which in this embodiment has six stages and is a sliding-sleeve synchromesh, constant mesh gearbox. The input gears 351 are arranged so as to be freely rotatable on the input shaft 317 and so as to be capable of being individually drivably connected to and disconnected from this shaft by means of a respective synchromesh sleeve, while the corresponding output gears 353 on the hollow output shaft 361 are all rigidly mounted on this shaft, so that all these gear wheels 353 continuously rotate together. The gradation of the gear ratios in the change-speed gear 307 are so matched with the requirements of the input-side epicyclic range gear 305 that an uninterrupted regular gradation of speeds is obtained with an interval ratio of preferably about 1.20.

The synchronisation of the change-speed gear unit may — as shown in the drawing — be effected by means of cones and baulk rings, in which in known manner the baulk ring, which is displaced by friction by the synchromesh sleeve via the selector, lies in contact with the conical extension of the gear wheel and in which synchronisation is effected by accelerating or slowing down the gear wheel, and the synchromesh sleeve engages in the ring of face teeth on the gearwheel. In general, the use of gearwheels 351, 353 having helical teeth is to be recommended for noise reasons. A more expensive possible synchronising system is the engine synchronising system which is also shown in Fig. 6. In this case, the main input and output shafts 317 and 361 are adjusted and synchronised with each other by means of rotational speed sensors which are symbolized by the broken lines 365. The pulses provided by the speed sensors are fed to a control unit 310 which compares the speeds and makes the necessary adjustments. In order to attain synchronous running when changing down, the engine governor is supplied by the unit 310 with control pulses in the sense of an increase in rotational speed, whereas, in order to attain synchronous running when changing up, the reverse clutch 304 or one of the brakes 325 or 327 is acted upon for a short time by control pulses in the sense of a reduction in rotational speed. When the synchronous running of the associated gear wheels and shafts is attained, the synchromesh sleeve can be manually or, if appropriate, automatically slid across without any shock so that the gear 351 of the next gear ratio becomes positively engaged with the shaft 317.

A characteristic feature of the transmission gear, which is crucial for the compact two-shaft construction, consists in the two-part construction of the epicyclic differential, the sun wheels 371, 373 of the two halves 308, 309 of which are rigidly interconnected by a differential shaft 375 located within the hollow output shaft 361. The hollow shaft 361 is advantageously journalled on the left-and right-hand sides of the output gears 353 of the change-speed gear 307 in correspondingly located partition walls of the housing. The shafts 361 and 375, which are located one within the other, constitute the output-side set of shafts on the line II, which shafts are coaxial with the half shafts 31 driven by the differential halves 308 and 309. The drive of the differential gear 308, 309 is obtained via the hollow shaft 361 which is connected to the respective annuli 378, 379. The drive is transmitted via the left and right planet wheel carriers 381, 382 to which the half shafts 31 are respectively fixed. The differential action is obtained by the two rigidly interconnected sun wheels 371, 373. In detail, what takes place is as follows:

The hollow output shaft 361 drives the two planet carriers 381 and 382 of the divided spur gear differential 308 and 309 via the left and right annuli 378 and 379 respectively. The drive is thus transmitted via the planet carriers 381, 382. If the output torques of the rear axle drives are equal, the differential shaft 375 will be in equilibrium and will remain stationary with respect to the differential halves. If, however, unequal output torques appear at the rear wheels, then the rear wheel which is running more easily will thereby attain additional speed, because the sun wheel 371 or 373 of the oppositely located differential half, due to the higher torque, introduces additional rotation via the differential shaft 373.

The differential will be seen to be completely symmetrical so far as the sizes and connections of the various gears are concerned. In the right-hand differential half 308, the planet wheel carrier 381 has two sets of planet wheels 383, 384, which are of known type in this connection, the inner set 383 meshing with the sun wheel 371 and the outer set 384 with the annulus 378. The sun wheel 371 can be locked for rotation with respect to the planet wheel carrier 381 by means of a differential lock 385. A special constructional characteristic is that the differential shaft 375 which interconnects the two halves 308, 309 of the differential passes through the interior of the hollow output shaft 361.

Basically a conventional bevel gear differential could be provided instead of the spur gear differential and be driven by one of the gears 353 on the shaft 361. The arrangement previously described is, however, more advantageous.

In general, it may be remarked in connection with the transmission gear shown in Fig. 6 that this contitutes a fully equipped and universally applicable combination which takes account of all functions of an agricultural tractor including operation in reverse, such as is desirable above all in front loading operations.

The gear-changing in and use of the transmission gear described above, when driven in reverse will now be considered in greater detail:

In this case, the clutch 321 for the extra low range of speeds and also the clutch 314 for the power take-off shaft are disengaged. A typical reverse drive employs direct drive in the epicyclic range gear 305, obtained by engaging the plate clutch 323 by means of oil under pressure, and for example the third gear or the third ratio in the change-speed gear 307 obtained by displacing the corresponding synchromesh sleeve. The transmission gear then produces a torque as soon as the main clutch 303 or the reverse clutch 304, each of which preferably has the form of a multi-disk clutch, is operated by the application thereto of oil under pressure. This can take place alternately for forward and rearward travel without any further gear-changing operation, so long as the speed and torque of the speed reduction concerned are suited to the prevailing conditions.

At this point, it should also be observed that the transversely disposed transmission gear according to the invention is particularly well suited for operation in forward and reverse using two clutches 303, 305 which are advantageously composed of identical component parts. This has to do with the fact that the two clutches are on the input side of the transmission gear, where the speed of the engine shaft 312 is relatively high and the torque is relatively low. This brings with it the decided advantage that the input-side bevel gear drive 311, 313, 315 is less heavily loaded than the bevel gear drive in conventional longitudinally disposed transmission gears, which is located on the output side. Thus, the clutch-associated bevel gears 313 and 315 and in general the entire clutch can be laid out favourably to suit the input torque.

The main and reverse clutches 303, 304 take over the function of the main or disengaging clutch which is otherwise provided on the input side for interrupting the drive line for the gear-changing or synchronising operation. The intermediate shaft, which was necessary in previous transmission gears with a reversing clutch as well as the intermediate gear wheel for reversing the direction of rotation of the input side gear shaft are likewise dispensed with. Thus, a substantial structural simplification is obtained with a more compact form of construction.

If one is prepared to forego this possibility of driving in reverse or the possibility of having available a plurality of reverse speeds, then the reverse clutch 304 can be dispensed with, as shown in Fig. 7. The simplified transmission gear according to Fig. 7, which is nevertheless assembled on a modular basis using like component elements, also includes no creep gear unit 306, no differential lock 385 and no synchronization control unit 310. In this case, the reverse drive function may be obtained particularly in known manner by additional means (not shown) in the range gear 305. Moreover, the change speed gear 307 shown in Fig. 7, which once again has six gear ratios, is a gear with simple dog clutches for effecting gear changes.

In the design of the transmission gear, including the main gearbox unit 300 and the rear axle drive units 26 or 27, the correct combination of step-up ratios and step-down ratios is of importance. It should be mentioned in this connection that the main transmission gear 300 can be utilized in conjunction with a two-stage reduction gear in the rear axle drive of a vehicle in the upper power output range, e.g. a vehicle of the agricultural tractor family. In the lower power output range, however, a single-stage epicyclic gear unit is preferred, mainly for reasons of cost, in which case the matching of the speed must be obtained by the input bevel gear having a suitable gear ratio. It is further to be understood that the construction of the main gear unit 300 may differ from the possibilities shown in Figs. 6 and 7, especially since in this case the modular and lightweight construction enables a large amount of free space to be provided which in turn enables the various different requirements of customers in regard to manner of operation, comfort and price to be taken into account.

Fig. 8 shows the transversely disposed main transmission gear according to Figs. 6 and 7 in vertical section longitudinally of the vehicle, approximately in the plane of the engine shaft 312.

The main gearbox housing 301, 302 is made of light-weight construction, which is acceptable in combination with frame parts 12 which receive the supporting forces and the reaction moments produced by the road wheels. The housing is constructed in the form of two shells. The upper shell 301 of the housing and the lower shell 302 thereof abut each other in a parting plane which contains the two shaft lines I and II. This has advantages in relation to fully mechanicized production of the transmission gear, but also has advantages in the case of repairs when the transmission gear is dismantled. This is particularly the case when only one shell of the housing is fixed to the frame, especially somewhat below or above the flange on the rear wall of the transmission gear, which flange may with advantage be secured in overlapping relationship to the cross-member 16 (see Fig. 4). For certain repairs, it is then sufficient to remove the other part of the housing without having to dismantle the entire transmission gear. However, this last-mentioned operation is relatively simple to carry out. The two halves of the housing may in particular be made of cast iron. It is moreover basically also possible for the housing of the transmission gear to be assembled from more than two housing shells. In the left part of the drawing can be seen an outwardly bulged portion of the lower housing part which preferably extends only in the region of the engine shaft 312 and contains, for example, the clutch 314 for the power take-off shaft. The bevel gear 313 of the main clutch can be seen behind this clutch 314. The drive of the power take-off shaft 390, which if necessary may project outwardly from the housing at both the front and rear ends thereof, is obtained via the clutch 314 and a gear wheel 388 to the gear wheel 389 which is fixed for rotation with the power take-off shaft 390.

The constructional arrangement illustrated is moreover suitable for tractors with an additional mechanical front wheel drive. In the vicinity of the shaft line II on the output side there is shown a bevel driving pinion 391 which has an extension in the form of a hollow shaft through which the power take-off shaft 390 extends. The front-wheel drive shaft itself, which is located below the plane of the drawing is drivable via a clutch 392 and an associated gear wheel 393. The bevel driving pinion 391 is in mesh with a bevel gear wheel, shown in projection, which may for example be formed integrally with the annulus 379.

The angle of inclination of the plane containing the axes of the two sets of shafts I and II is of importance. This plane forms with the engine shaft 312 an angle in the range 10 to 60 degrees, preferably 15 to 30 degrees. The housing is normally installed so that the lower half 302 thereof assumes a position in the frame of the vehicle with its bottom wall substantially horizontal. The above-mentioned preferred range of inclinations, follows from the fact that, if the angle of inclination is too steep, the power take-off shaft 390, which must be substantially horizontally disposed, will no longer be able to be mounted through the rear lower part of the housing. If, however, the plane of the shaft lines I and II were too level, obstructions could occur in the left-hand part of Fig. 8, particularly in regard to the introduction of the engine shaft 312. If a relatively steep angle is chosen for the plane of the shaft lines I and II and correspondingly for the parting plane of the housing, fixing of the rear wall of the upper housing part 301 may be advisable, this fixing preferably being to the cross-member 16 of the vehicle frame.

## Claims

1. A transverse gearbox for a vehicle with an in-line engine, having a longitudinal engine shaft (312), and rotating components mounted at least mainly on first and second parallel, transverse shaft lines (I, II), including an input shaft (317) on the first shaft line (I) driven from the engine shaft (312) by way of bevel gears (311, 313, 315), a change speed gear (307) between the input shaft (317) and a hollow output shaft (361) on the second shaft line (II), a differential gear (308, 309) driven from the output shaft (361) and driving two half shafts (31) on the second shaft line (II), one of them by way of a shaft (375) passing through the hollow output shaft (361), and an epicyclic range gear (305) in cascade with the change speed gear (307), characterised in that the bevel gears (311, 313, 315) drive a second hollow shaft (319) which drives the epicyclic range gear (305) which is disposed on the first shaft line (I), the change speed gear input shaft (317) being the output shaft of the epicyclic range gear (305) and passing through the second hollow shaft (319) from the range gear (305) on one side of the bevel gears (311, 313, 315) to the change speed gear (307) on the other side of the bevel gears.

2. A transverse gearbox according to claim 1, characterised by a creep gear (306) on the first shaft line (I) between the bevel gears (311, 313, 315) and the range gear (305), and means (321) for selectively coupling the second hollow shaft (319) directly to the input of the range gear (305) or through the creep gear (306) to the input of the range gear (305).

3. A transverse gearbox according to claim 2, wherein the bevel gears comprise a drive bevel gear (311) meshing with first and second oppositely rotating bevel gears (313, 315) rotatably mounted relative to the second hollow shaft (319), forward and reverse clutches (303, 304) being disposed between the first and second bevel gears respectively and the second hollow shaft (319), characterised in that the creep gear (306) is an epicyclic gear which reverses the sense of rotation and in that the said coupling means is a creep clutch (321) between the said second bevel gear (315) and the input of the range selector gear (305).

4. A transverse gearbox according to claim 1, 2, or 3, characterised in that the range gear (305) is a two-stage epicyclic gear with an input annulus (334) fast with the second hollow shaft (319) and means (325, 327) for selectively bringing the stages into action.

5. A transverse gearbox according to claim 4, characterised by a direct drive clutch (323) between the input annulus (334) and the change-speed gear input shaft (317).

6. A transverse gearbox according to claim 3 and claim 4, characterised in that the said input annulus (334) is fast with an output annulus (336) of the creep gear (306).

7. A tgransverse gearbox according to claim 6, characterised in that the creep gear (306) has a non-rotating planet wheel carrier (338) and in that the creep clutch (321) is between the said second bevel gear (315) and the sun-wheel (340) of the creep gear.

## Revendications

1. Boîte de vitesses transversale pour un véhicule équipé d'un moteur en ligne, comportant un arbre de moteur longitudinal (312) et des composants rotatifs montés au moins principalement sur une première et une deuxième lignes d'arbres parallèles transversales (I, II), comprenant un arbre d'entrée (317) sur la première ligne d'arbres (I) entraîné par l'arbre de moteur (312) au moyen de pignons coniques (311, 313, 315), un mécanisme de changement de vitesse (307) placé entre l'arbre d'entrée (317) et un arbre creux de sortie (361) sur la deuxième ligne d'arbres (II), un mécanisme différentiel (308, 309) entraîné par l'arbre de sortie (361) et entraînant deux demi-arbres (31) sur la deuxième ligne d'arbres (II), dont l'un par l'intermédiaire d'un arbre (375) qui passe dans l'arbre creux de sortie (361), et un train épicycloïdal de sélection de gamme (305) en cascade avec le mécanisme de changement de vitesse (307), caractérisée en ce que les pignons coniques (311, 313, 315) entraînent un deuxième arbre creux (319) qui entraîne le train épicycloïdal de gamme (305) qui est disposé sur la première ligne d'arbres (I), l'arbre d'entrée (317, du mécanisme de changement de vitesse étant l'arbre de sortie du train épicycloïdal de gamme (305) et passant dans le deuxième arbre creux (319), du train épicycloïdal de gamme (305) situé d'un côté des pignons coniques (311, 313, 315) au mécanisme de changement de vitesse (307) situé de l'autre côté des pignongs coniques.

2. Boîte de vitesses transversale suivant la revendication 1, caractérisée par un mécanisme de vitesse très lente ou rampante (306) prévu sur la première ligne d'arbres (I) entre les pignons coniques (311, 313, 315) et le mécanisme de gamme (305), et par des moyens (321) pour accoupler sélectivement le deuxième arbre creux (319) directement à l'entrée du mécanisme de gamme (305) ou, par l'intermédiaire du mécanisme de vitesse rampante (306), à l'entrée du mécanisme de gamme (305).

3. Boîte de vitesses transversale suivant la revendication 2, dans laquelle les pignons coniques comprennent un pignon conique d'entraînement (311) qui engrène avec un premier et un deuxième pignons coniques tournant en sens inverse (313, 315) montés de façon tournante par rapport au deuxième arbre creux (319), des embrayages de marche avant et de marche arrière (303, 304) étant disposés entre le premier et le deuxième pignons coniques respectivement et le deuxième arbre creux (319), caractérisée en ce que le mécanisme de vitesse rampante (306) est un train épicycloïdal qui inverse le sens de rotation, et en ce que lesdits moyens d'accouplement comprennent un embrayage de vitesse rampante (321) prévu entre le deuxième pignon conique (315) et l'entrée du mécanisme de sélection de gamme (305).

4. Boîte de vitesses transversale suivant la revendication 1, 2 ou 3, caractérisée en ce que le mécanisme de sélection de gamme (305) est un train épicycloïdal à deux étages comprenant une couronne dentée d'entrée (334) solidaire du deuxième arbre creux (319) et des moyens (325, 327) pour mettre sélectivement en service les étages.

5. Boîte de vitesses transversale suivant la revendication 4, caractérisée par un embrayage de prise directe (323) entre la couronne d'entrée (334) et l'arbre d'entrée (317) du mécanisme de changement de vitesse.

6. Boîte de vitesses transversale suivant la revendication 3 et la revendication 4, caractérisée en ce que la couronne d'entrée (334) est solidaire d'une couronne de sortie (336) du mécanisme de vitesse rampante (306).

7. Boîte de vitesses transversale suivant la revendication 6, caractérisée en ce que le mécanisme de vitesse rampante (306) comprend un porte-satellites non rotatif (338) et en ce que l'embrayage de vitesse rampante (321) est entre le deuxième pignon conique (315) et le planétaire (340) du mécanisme de vitesse rampante.

## Patentansprüche

1. Querliegendes Getriebe für ein Fahrzeug mit einem Reihenmotor mit einer längsverlaufenden Motorwelle (312) und rotierenden Komponenten, die wenigstens haptsächlich auf ersten und zweiten parallelen, querverlaufenden Wellenlinien (I, II) montiert sind und eine Eingangswelle (317) auf der ersten Wellenlinie (I) aufweisen, welche von der Motorwelle (312) über Kegelräder (311, 313, 315) angetrieben wird, mit einem Geschwindigkeitswechselgetriebe (307) zwischen der Eingangswelle (317) und einer hohlen Ausgangswelle (361) auf der zweiten Wellenlinie (II), mit einem Differentialgetriebe (308, 309), das von der Ausgangswelle (361) angetrieben wird und zwei Halbwellen (31) auf der zweiten Wellenlinie (II) antreibt, und zwar eine von diesen über eine Welle (375), welche durch die hohle Ausgangswelle (361) ragt, und mit einem epizyklischen Bereichsgetriebe (305) in Reihe mit dem Geschwindigkeitswechselgetriebe (307), dadurch gekennzeichnet, daß die Kegelräder (311, 313, 315) eine zweite Hohlwelle (319) antreiben, welche das epizyklische Bereichsgetriebe (305) antreibt, das auf der ersten Wellenlinie (I) angeordnet ist, wobei die Eingangswelle (317) des Geschwindigkeitswechselgetriebes die Ausgangswelle des epizyklischen Bereichsgetriebes (305) ist und durch die zweite hohle Welle (319) von dem Bereichsgetriebe (305) auf der einen Seite der Kegelräder (311, 313, 315) zu dem Geschwindigkeitswechselgetriebe (307) auf der anderen Seite der Kegelräder reicht.

2. Querliegendes Getriebe nach Anspruch 1, gekennzeichnet durch ein Kriechgetriebe (306) auf der ersten Wellenlinie (I) zwischen den Kegelrädern (311, 313, 315) und dem Bereichsgetriebe (305) und durch Mittel (321) zum selektiven Kuppeln der zweiten hohlen Welle (319) direkt mit dem Eingang des Bereichsgetriebes (305) oder durch das Kriechgetriebe (306) zum Eingang des Bereichsgetriebes (305).

3. Querliegendes Getriebe nach Anspruch 2, bei dem die Kegelräder ein treibendes Kegelrad (311), das mit ersten und zweiten entgegengesetzt drehenden Kegelrädern (313, 315) in Eingriff steht, die drehbar gegenüber der zweiten hohlen Welle (319) montiert sind, Vorwärts- und Rückwärtskupplungen (303, 304) aufweisen, die jeweils zwischen den ersten bzw. den zweiten Kegelrädern und der zweiten hohlen Welle (319) angeordnet sind, dadurch gekennzeichnet, daß das Kriechgetriebe (306) ein epizyklisches Getriebe ist, welches den Drehsinn umkehrt, und daß die genannten Kupplungsmittel eine Kriechkupplung (321) zwischen dem besagtem zweiten Kegelrad (315) und dem Eingang des Bereichsauswahlgetriebes (305) sind.

4. Querliegendes Getriebe nach Anspruch 1, 2 oder 3, dadurch gekennzeichnet, daß das Bereichsgetriebe (305) ein zweistufiges epyzyklisches Getriebe mit einem Eingangsring (334) ist, der fest mit der zweiten hohlen Welle (319) verbunden ist, und daß Mittel (325, 327) vorgesehen sind, um selektiv die Stufen zur Wirkung zu bringen.

5. Querliegendes Getriebe nach Anspruch 4, gekennzeichnet durch eine Kupplung (323) für den direkten Antrieb zwischen dem Eingangsring (334) und der Eingangswelle (317) des Geschwindigkeitswechselgetriebes.

6. Querliegendes Getriebe nach Anspruch 3 und Anspruch 4, dadurch gekennzeichnet, daß der genannte Eingangsring (334) mit einem Ausgangsring (336) des Kriechgetriebes (306) fest verbunden ist.

7. Querliegendes Getriebe nach Anspruch 6, dadurch gekennzeichnet, daß das Kriechgetriebe (306) einen nicht rotierenden Planetenradträger (338) aufweist und daß die Kriechkupplung (321) zwischen dem zweiten Kegelrad (315) und dem Sonnenrad (340) des Kriechgetriebes angeordnet ist.

FIG.1

FIG.2

1

# FIG. 3

# FIG. 4

FIG. 5

0 076 591

FIG. 6

FIG.7

305    312    307    351    303    353    309    308

0 076 591

FIG. 8

0 076 591